# EUROPÄISCHE PATENTSCHRIFT

(11) **EP 1 002 677 B1**
(45) Veröffentlichungstag und Bekanntmachung des Hinweises auf die Patenterteilung: **02.01.2002**
(21) Anmeldenummer: 99119578.5
(22) Anmeldetag: 02.10.1999
(51) Int. Cl.: B60H 1/00

(54) **Heiz- und/oder Klimaanlage für ein Kraftfahrzeug**
Heating and/or air conditioning unit for a vehicle
Dispositif de chauffage ou de climatisation d'un véhicule

(30) Priorität: 11.11.1998 DE 19851982
(43) Veröffentlichungstag der Anmeldung: 24.05.2000
(73) Patentinhaber: DaimlerChrysler AG, 70567 Stuttgart (DE)
(72) Erfinder: Arold, Klaus, 71069 Sindelfingen (DE)

(56) Entgegenhaltungen:
- EP-A- 0 102 611
- DE-A- 3 526 518
- DE-A- 3 737 087
- DE-C- 19 616 965
- GB-A- 2 322 186

## Beschreibung

Die Erfindung betrifft eine Heiz- und/oder Klimaanlage gemäß den gattungsbildenden Merkmalen des Anspruchs 1, wie sie aus GB 2 322 186 A bekannt ist.

Eine weitere Heiz- und/oder Klimaanalage ist aus der EP 0 102 611 B1 bekannt. Der Luftstrom für den Fahrzeuginnenraum wird temperaturmäßig mit Hilfe einer Kaltluftklappe, die bei luftseitigen Anlagen im Kaltluftkanal angeordnet ist, geregelt. Die Menge der über die Mitteldüse in den Fahrgastraum einströmenden Luft wird mittels Sperrklappe geregelt. Die Kaltluftklappe und Sperrklappe sind über einen weiten Bereich unabhängig voneinander einstellbar. Eine zwangsweise Steuerung der beiden Klappen erfolgt erst, wenn die Sperrklappe soweit geschlossen ist, daß ein verhältnismäßig geringer Luftstrom von beispielsweise 30% der Maximalmenge zum Insassen-Kopfbereich gelangt. Bei weiterem Schließen der Sperrklappe wird die Kaltluftklappe zwangsweise geschlossen. Dies verhindert, daß ein nicht gewünschter Kaltluftstrom in den Fußraum und zu den Entfrosterdüsen gelangt. Diese Art der Steuerung der Klappen erfordert eine unabhängige Steuerung zur Bewegung der beiden Klappen.

Der Erfindung liegt daher die Aufgabe zugrunde, die am Bediengerät eingestellte Auto-Regelung der Heizungs- und/oder Klimaanlage und die Auto-Regelung der Mitteldüse zu vereinfachen und hierbei gleichzeitig die manuell eingestellte Temperaturabsenkung der Mittelebene zu ermöglichen.

Erfindungsgemäß wird die Aufgabe durch die Merkmale des Anspruchs 1 gelöst. Vorteilhafte Aus- und Weiterbildungen des Erfindungsgegenstandes sind durch die Merkmale der Unteransprüche gekennzeichnet.

Ein wesentlicher Vorteil dieser Ausgestaltungen liegt darin, daß zur Bewegung der Kaltluftklappe und der Mittelebenenklappen mittels Führungselement nur ein Stellmotor benötigt wird, um sowohl die über das Bediengerät eingestellte Auto-Regelung der Heizungs- und/oder Klimaanlage zu ermöglichen als auch die Auto-Regelung der Mitteldüse. Ebenso wird durch das Entriegeln der Auto-Regelung der Mitteldüse und durch manuelle Einstellung der Mitteldüse, die gewünschte Temperaturabsenkung der Mittelebene durch Öffnen der Kaltluftklappe möglich.

Die Erfindung wird anhand eines Ausführungsbeispieles in Verbindung mit einer Figurenbeschreibung näher erläutert. Es zeigt
- Fig. 1: ein Querschnitt einer Heiz- und/oder Klimaanlage mit Temperaturschichtung zwischen Mittelebene und Fußraum;
- Fig. 2: Vorderansicht einer Mitteldüse,
- Fig. 3: ein Diagramm zur zwangsgeführten Steuerung der Kaltluftklappe und der Mittelebenenklappe.

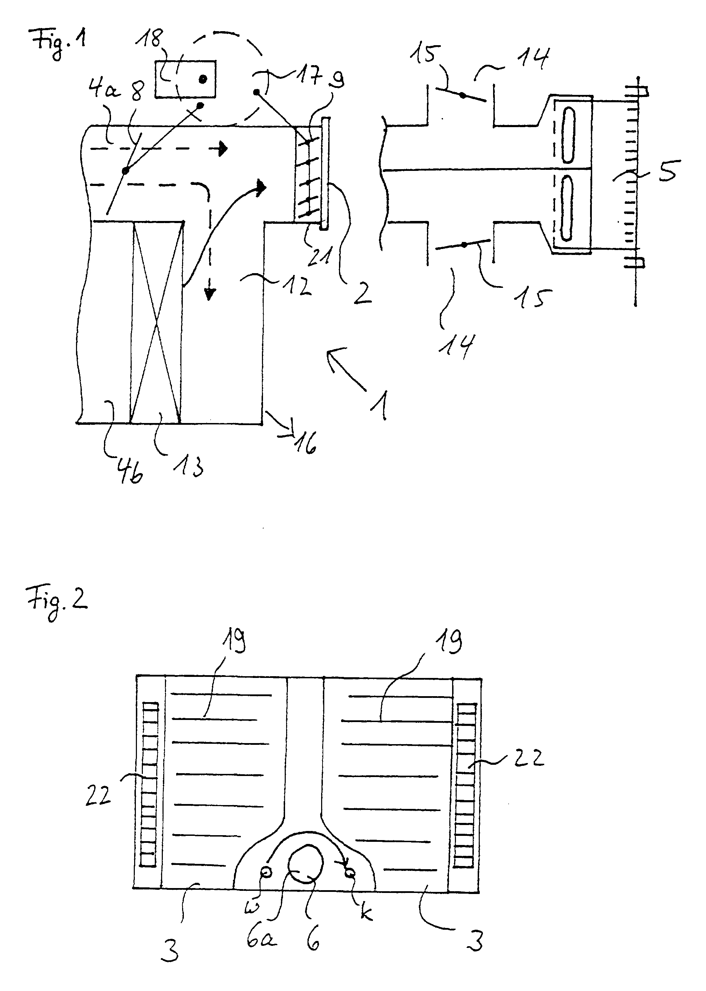

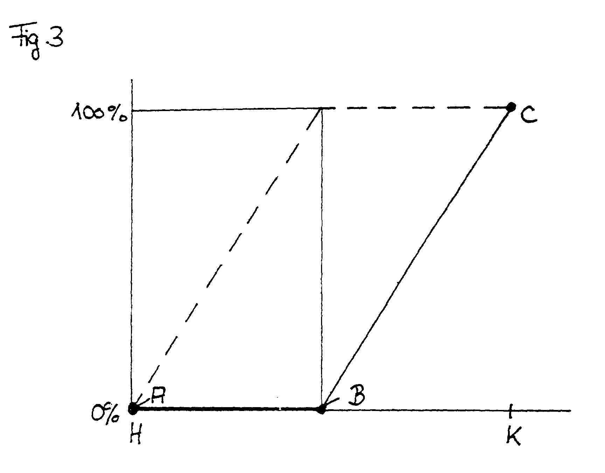

Fig. 1 zeigt einen Querschnitt einer Heiz- und/oder Klimaanlage 1, die einen Kaltluftkanal 4a aufweist, durch den die Kaltluft in eine Mischkammer 12 gelangt, wobei die Kaltluftmenge mit einer im Kaltluftkanal 4a angeordneten Kaltluftklappe 8 regelbar ist. Im Warmluftkanal 4b ist ein Wärmetauscher 13 angeordnet, durch den warme Luft in die Mischkammer 12 einströmt. In der Mischkammer 12 mischt sich die warme Luft mit der durch den Kaltluftkanal 4a einströmenden kalten Luft. Die Menge der in die Mischkammer 12 einströmenden Kaltluft wird durch Öffnen der Kaltluftklappe 8 gesteuert. Der Warmluftkanal 4b ist im unteren Teil der Mischkammer 12 und der Kaltluftkanal 4a im oberen Teil der Mischkammer 12 angeordnet. Die Mischkammer 12 weist wenigstens eine Auslaßöffnung 21 zur Mittelebene 2 auf, wobei zur Steuerung der Luft zur Mittelebene 2 mindestens eine Mittelebenenklappe 9 vorgesehen ist. Mehrere Mittelebenenklappen 9 sind untereinander verbunden, so daß die Bewegung einer Mittelebenenklappe 9 auch die Bewegung der anderen beschreibt. Im folgenden wird'daher von einer Mittelebenenklappe 9 gesprochen, obwohl auch mehrere Mittelebenenklappen 9 damit gemeint sein können. Die Luft in der Mittelebene 2 wird dann auf die Mitteldüse 5 und die rechte und linke Seitendüse 14 verteilt. Sowohl die Mitteldüse 5 als auch die Seitendüsen 14 sind zur Steuerung der Luftmenge über Klappen 19 verschließbar. Von der Mischkammer 12 sind auch Auslaßöffnungen in den Fußraum 16 vorgesehen, die im unteren Bereich der Mischkammer 12 angeordnet sind. Im unteren Teil der Mischkammer 12 ist die Luft aufgrund des im unteren Bereich angeordneten Wärmetauschers 13 wärmer als im oberen Teil der Mischkammer 12. Die Fußraumtemperaturen sind somit am wärmsten und die Mitteldüsentemperaturen am kühlsten. Der Fußraum wird gewöhnlich stärker beheizt als die Mittelebene 2, durch welche Luft in den Kopfbereich geführt wird. Die Mittelebenenklappe 9 und die Kaltluftklappe 8 sind mittels einer Zwangsführung miteinander gekoppelt. Die Zwangsführung weist ein mit der Kaltluftklappe 8 und mit der Mittelebenenklappe 9 als Steuerscheibe ausgeführtes gekoppeltes Führungselement 17 auf, das mit einem Stellmotor 18 bewegt wird. Die zwangsgeführte Bewegung der Mittelebenenklappe 9 und der Kaltluftklappe 8 wird entsprechend des in Fig. 3 dargestellten Diagramms ausgeführt.

In Fig. 2 ist eine Vorderansicht einer Mitteldüse 5 gezeigt, wie sie im Innenraum eines Fahrzeuges angeordnet ist. Die Mitteldüse 5 weist einen rechten und linken mit Klappen 19 verschließbaren Luftausströmer 3 auf, wobei die Klappen 19 einzeln über seitlich davon angeordnete Bedienelemente 22 verstellbar sind. Zur automatischen Steuerung der Mitteldüse 5 ist eine Mitteldüsenautomatiktaste 6 angeordnet, die nach Verriegelung die automatische Steuerung der Mitteldüse 5 bewirkt. Bei nicht betätigter Mitteldüsenautomatiktaste 6 kann durch Drehen in Pfeilrichtung des die Mitteldüsenautomatiktaste 6 bildenden Bedienelementes 6a die Temperatur von warm w nach kalt k geregelt werden. Dies ermöglicht eine manuelle Temperaturabsenkung der Mittelebene.

Fig. 3 zeigt ein Diagramm, das die zwangsgeführte Steuerkurve der Kaltluftklappe 8 und der Mittelebenenklappe 9 wie in Fig. 1 dargestellt beschreibt. Im Diagramm aufgetragen ist die Öffnung der Klappen 8,9 in Prozent über der Temperatur des Luftstromes von Warm H bis Kalt K. Die gestrichelt eingezeichnete Kurve beschreibt die Stellung der Mittelebenenklappe 9, die durchgezogene Kurve beschreibt die Stellung der Kaltluftklappe 8. Die Stellung der Klappen 8,9 bei A beschreibt maximales Heizen; sowohl die Mittelebenenklappe 9, als auch die Kaltluftklappe 8 sind geschlossen. Zwischen Stellung A und B ist die Mitteldüsenautomatiktaste 6 verriegelt. Die Bediengeräteautomatik reguliert optimal die Luftmenge zur Mittelebene 2 durch Öffnen der Mittelebenenklappe 9 von geschlossen bei A bis vollständig geöffnet bei B. Bei B ist die Mittelebenenklappe 9 zu 100% geöffnet und die Kaltluftklappe 8 ist geschlossen. Diese Stellung B der Mittelebenenklappe 9 und der Kaltluftklappe 8 wird bei Entriegeln der Mitteldüsenautomatiktaste 6 eingestellt. Die Mittelebenenklappe 9 ist vollständig geöffnet und durch Drehen des Bedienelementes 6a, das die Mitteldüsenautomatiktaste 6 aufweist, in Pfeilrichtung wie in Fig. 2 beschrieben, wird entsprechend die Kaltluftklappe 8 geöffnet und der Mischkammer 12 kalte Luft zugeführt und damit eine manuelle Temperaturabsenkung der Mittelebene 2 erreicht. Dieser Vorgang wird im Diagramm zwischen Stellung B und C beschrieben. Bei verriegelter Mitteldüsenautomatiktaste 6 übernimmt wieder die Bediengeräteautomatik die Regelung der Mittelebene 2.

## Patentansprüche

1. Heiz- und/oder Klimaanlage (1) für Fahrzeuginnenräume mit in der Mittelebene (2) des Fahrzeuginnenraums, insbesondere im Armaturenbrett, angeordneten Luftausströmern (3), die eine über Luftkanäle (4a,4b) mit einem Luftverteiler verbundene Mitteldüse (5) umfaßt, mit einer im Luftverteiler integrierten Mischkammer (12), die einen mit einer Kaltluftklappe (8) gesteuerten Kaltluftkanal (4a) zur Zuführung von Kaltluft zur Mischkammer (12) und mindestens eine Auslaßöffnung (21) zur Mittelebene (2) aufweist, wobei die Luft zur Mittelebene (2) mit mindestens einer Mittelebenenklappe (9) steuerbar ist, mit einer Bediengeräteautomatik, die eine wobei Automatiktaste aufweist, und mit einem Steuergerät zum Verknüpfen von Signalwerten der Einstellglieder und programmgemäßen Ansteuern von Stellmotoren zum Einstellen von Luftklappen,
die Kaltluftklappe (8) und die mindestens eine Mittelebenenklappe (9) mittels einer Zwangsführung in ihren Bewegungsmöglichkeiten derart miteinandergekoppelt sind, daß
- zum maximalen Heizen die Kaltluftklappe (8) und die Mittelebenenklappe (9) geschlossen sind,
- zur Regulierung der Luftmenge zur Mittelebene (2) die Kaltluftklappe (8) geschlossen ist und die Mittelebenenklappe (9) entsprechend gewünschter Luftmenge geöffnet werden,
**dadurch gekennzeichnet, daß** die Mitteldüse (5) zusätzlich eine Mitteldüsenautomatiktaste (6) aufweist und daß zur nicht automatischen Temperaturabsenkung der Mittelebene (2) die Mitteldüsenautomatiktaste (6) entriegelt ist und durch Drehen eines Bedienelementes (6a) entsprechend die Kaltluftklappe (8) geöffnet wird.

2. Heiz- und/oder Klimaanlage gemäß Anspruch 1,
**dadurch gekennzeichnet,**
**daß** die Zwangsführung ein mit der Kaltluftklappe (8) und mit der Mittelebenenklappe (9) gekoppeltes Führungselement (17) aufweist, das mit einem Stellmotor (18) bewegt wird.

## Claims

1. Heating and / or air conditioning installation (1) for vehicle inner areas with air discharge members (3) arranged in the middle plane (2) of the vehicle inner area, in particular in the dashboard, wherein this heating and / or air conditioning installation (1) has a middle air vent (5) connected through air channels (4a, 4b) with an air distributor, with a mixing chamber (12) integrated into the air distributor, wherein the mixing chamber (12) has a cold air channel (4a) controlled with a cold air valve (8) for supplying cold air to the mixing chamber (12) and at least one outlet (21) to the middle plane (2), wherein the air to the middle plane (2) can be controlled with at least one middle plane valve (9), with an automatic operating system, which has an automatic button, and with a control device for the connection of signal values of the adjusting members and programmed control of actuators for the purpose of adjusting air valves, wherein the cold air valve (8) and the minimum of one middle plane valve (9) are coupled with each other in their movement possibilities by means of compulsory control in such a way that
- for maximum heating the cold air valve (8) and the middle plane valve (9) are closed,
- for regulating the quantity of air to the middle plane (2) the cold air valve (8) is closed and the middle plane valve (9) is opened corresponding to the desired quantity of air,
**characterised in that** the middle air vent (5) additionally has a middle air vent automatic button (6) and that for the purpose of non-automatic temperature decrease of the middle plane (2) the middle air vent automatic button (6) is unlocked and through turning of an operating element (6a) correspondingly the cold air valve (8) is opened.

2. Heating and / or air conditioning installation according to Claim 1, **characterised in that** the compulsory guide has a guide element (17) coupled with the cold air valve (8) and with the middle plane valve (9), wherein this guide element (17) is moved with an actuator (18).

## Revendications

1. Installation de chauffage et/ou de climatisation (1) pour des habitacles de véhicules comportant des dispositifs de soufflage d'air (3) disposés dans le plan médian (2) de l'habitacle du véhicule, notamment dans le tableau de bord, qui comprend une buse médiane (5) reliée à un distributeur d'air par l'intermédiaire de canaux de circulation d'air (4a, 4b), comportant une chambre de mélange (12), qui est intégrée dans le distributeur d'air et comporte un canal de circulation d'air froid (4a) commandé par un clapet d'air froid (8) et servant à amener de l'air froid à la chambre de mélange (12), et au moins une ouverture de sortie (21) débouchant dans le plan médian (2), l'air envoyé au plan médian (2) pouvant être commandé à l'aide d'au moins un clapet de plan médian (9), et comportant un système automatique d'appareil de manipulation, qui possède une touche de fonctionnement automatique, et comportant un appareil de commande pour combiner des valeurs de signaux des organes de réglage et pour commander, conformément à un programme, des servomoteurs pour régler des clapets d'air, et dans laquelle le clapet d'air froid (8) et le au moins un clapet de plan médian (9) sont couplés entre eux, en ce qui concerne leurs possibilités de déplacement, au moyen d'un guidage forcé de telle sorte que
- pour le chauffage maximum, le clapet d'air froid (8) et le clapet de plan médian (9) sont fermés,
- pour la régulation de la quantité d'air envoyée au plan médian (2), le clapet d'air froid (8) est fermé et le clapet de plan médian (9) est ouvert conformément à la quantité d'air désirée,
**caractérisée en ce que** la buse médiane (5) comporte en outre une touche (6) d'actionnement automatique de la buse médiane et que pour l'abaissement automatique de la température du plan médian (2), la touche (6) d'actionnement automatique de la buse médiane est déverrouillée et, sous l'effet de la rotation d'un organe de commande (6a), le clapet d'air froid (8) est ouvert de façon correspondante.

2. Installation de chauffage et/ou de climatisation selon la revendication 1, **caractérisée en ce que** le système de guidage forcé comporte un élément de guidage (17) qui est couplé au clapet d'air froid (8) et au clapet de plan médian (9) et est déplacé par un servomoteur (18).
